(19) Europäisches Patentamt / European Patent Office / Office européen des brevets

(11) **EP 1 417 072 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(21) Anmeldenummer: **02758086.9**

(22) Anmeldetag: **09.07.2002**

(51) Int Cl.:
*B23K 26/38* (2006.01)    *B23K 26/14* (2006.01)

(86) Internationale Anmeldenummer:
**PCT/DE2002/002504**

(87) Internationale Veröffentlichungsnummer:
**WO 2003/015978 (27.02.2003 Gazette 2003/09)**

(54) **VERFAHREN UND VORRICHTUNG ZUM EINBRINGEN VON LÖCHERN IN WERKSTÜCKE MITTELS LASERSTRAHLEN**

METHOD AND DEVICE FOR DRILLING HOLES IN WORKPIECES BY MEANS OF LASER BEAMS

PROCEDE ET DISPOSITIF POUR REALISER DES TROUS DANS DES PIECES AU MOYEN DE RAYONS LASER

(84) Benannte Vertragsstaaten:
**DE FR GB IT**

(30) Priorität: **08.08.2001 DE 10138866**

(43) Veröffentlichungstag der Anmeldung:
**12.05.2004 Patentblatt 2004/20**

(73) Patentinhaber: **ROBERT BOSCH GMBH**
**70442 Stuttgart (DE)**

(72) Erfinder:
• **CALLIES, Gert**
**77815 Buehl (DE)**

• **WILLERT, Markus**
**89551 Koenigsbronn (DE)**

(56) Entgegenhaltungen:
EP-A- 0 352 326    EP-A- 0 635 331
EP-A- 0 985 484    WO-A- 02/076666
US-A- 3 601 576    US-A- 4 220 842

• SUN J ET AL: "INERT GAS BEAM DELIVERY FOR ULTRAFAST LASER MICROMACHINING AT AMBIENT PRESSURE" JOURNAL OF APPLIED PHYSICS, AMERICAN INSTITUTE OF PHYSICS. NEW YORK, US, Bd. 89, Nr. 12, 15. Juni 2001 (2001-06-15), Seiten 8219-8224, XP001066091 ISSN: 0021-8979

**Beschreibung**

Die Erfindung betrifft ein Verfahren zum Herstellen eines Lochs in einem Werkstück mittels mindestens eines Laserstrahls, gemäß des oberbegriffs des Anspruchs 1, und eine Vorrichtung zum Herstellen eines Lochs in einem Werkstück, gemäß des Oberbegriffs des Anspruchs 10.

Stand der Technik

Ein Verfahren und eine Vorrichtung der hier angesprochenen Art sind bekannt. Sie dienen zum Herstellen von präzisen Kleinstlöchern in Werkstücken mittels Laserstrahlen, wobei die Löcher einen Durchmesser kleiner als 250 µm aufweisen können.

Beim Laserstrahlbohren, insbesondere mit Kurzpulslasern, mit den bekannten Vorrichtungen in aus metallischem Werkstoff bestehenden Werkstücken bilden sich auf der Laserstrahleintrittsseite des Werkstücks Schmelzgrate, die in einem Nacharbeitsvorgang entgratet werden müssen. Ferner bildet sich im Loch, das heißt auf der Umfangsfläche des Lochs ein Schmelzfilm, der ebenfalls nachträglich entfernt werden muss. Dabei kann es zu nicht erwünschten Ausbrüchen an den Kanten des Lochs und/oder zu einer Verstopfung des Lochs kommen.

Beispielsweise auf dem Gebiet der Kraftstoffeinspritzung werden im zunehmenden Maße konische Löcher, beispielsweise in Düsen, dahingehend gefordert, dass in der Regel die Laserstrahleintrittsöffnung (Kraftstoffauslauf) einen kleineren Durchmesser als die Laserstrahlaustrittsöffnung (Kraftstoffeinlauf) aufweist. Zur Herstellung dieser Löcher mit einer gewünschten Konizität ist es bekannt, das Werkstück gegenüber dem Laserstrahl zu kippen und/oder die Bearbeitungsstrategie beziehungsweise die Parameter des Laserstrahls entsprechend einzustellen. Es hat sich gezeigt, dass die mit den bekannten Verfahren realisierbare Konizität, die über den k-Faktor definierbar ist, je nach Lochdurchmesser relativ begrenzt ist.

Aus Sun, J. [u.a.]: Intert gas beam delivery for ultrafast laser micromachining at ambient pressure; J. Appl. Phys., Vol. 89, No. 12, 15. Juni 2001, geht ein Verfahren zum Herstellen von Löchern in Werkstücken mittels eines Kurzpuls- oder Ultrakurzpulsstrahllasers hervor, bei dem der Auftreffstelle des Laserstrahls auf dem Werkstück ein Prozessgas zugeführt wird, das aus Helium oder Stickstoff besteht.

Aus der EP 0 635 331 A1 ist eine Laserschneidvorrichtung bekannt, die eine Laserstrahlquelle zum Erzeugen mindestens eines auf das Werkstück richtbaren Laserstrahls, eine Düsenanordnung mit einer mit wenigstens einem unter Druck stehenden Prozessgas beaufschlagbaren Düse, bei der der aus der Düse austretende Gasstrahl in Richtung auf die Auftreffstelle des Laserstrahls an dem Werkstück richtbar ist, und eine Einrichtung zum Beimischen von Zusatzgasen zu einem Hauptgas aufweist.

Vorteile der Erfindung

Beim erfindungsgemäßen Verfahren gemäß Anspruch 1 ist vorgesehen, dass mittels optischer Beeinflussung des Laserstrahls das Loch als konisches Loch mit einem einstellbaren Konizitäts-Faktor hergestellt wird und dass für eine gewünschte, die Konizität vergrößernde oder verkleinernde Feineinstellung des herzustellenden Lochs der Druck, ein der Wechselwirkungszone zugeführter Volumenstrom und die Zusammensetzung des aus Helium (He), Sauerstoff ($O_2$), Argon (Ar) und/oder Stickstoff ($N_2$) bestehenden beziehungsweise zusammengemischten Prozessgases eingestellt werden, wobei der Druck des Prozessgases im Bereich von 0,1 bar bis 20 bar und der Volumenstrom des Prozessgases in einem Bereich von 0,8 N1/min bis 270 N1/min eingestellt werden.

Das erfindungsgemäße Verfahren ermöglicht eine gezielte Beeinflussung der Lochform. Es sind Löcher mit einer gewünschten Konizität realisierbar. Die "konischen" Löcher weisen vorzugsweise einen kreisrunden Querschnitt auf, wobei sich deren Durchmesser über die Länge des Lochs ändert. Dadurch, dass sich durch das Verfahren die vorstehend genannte Lochform realisierten läßt, wobei Ablationsrückstände vermieden beziehungsweise deutlich reduziert werden, ist eine kostengünstige Herstellung eines Lochs oder mehrere dieser Löcher möglich. Ferner hat sich gezeigt, dass sich die Bearbeitungszeiten gegenüber bekannten Verfahren verkürzen lassen.

Das dem Verfahren zu Grunde liegende Prinzip beruht darauf, dass das der Wechselwirkungszone zwischen dem Laserstrahl und dem Werkstück zugeführte Prozessgas die Eigenschaften des Materialdampf-Plasmagemisches und damit die Wechselwirkung zwischen Laserstrahl und Werkstück bestimmt. Durch verdampfendes Material des Werkstücks wird die das Loch umgebende Atmosphäre komprimiert, so dass sich eine starke Stoßwelle ausbilden kann, die beispielsweise bei der Bearbeitung des Werkstücks mit einem Kurzpulslaser eine Ausbreitungsgeschwindigkeit von bis zu mehreren 10 km/s erreichen kann. Die Stoßwelle bildet eine Barriere für das vom Werkstück abdampfende Material, wobei der Druck, die Dichte und die Temperatur und damit auch der Ionisationsgrad und das Absorptionsvermögen im Materialdampf-Plasmagemisch mit den Eigenschaften der Stoßwelle zusammenhängen. Die Ausbreitungsgeschwindigkeit der Stoßwelle und deren thermodynamischen Eigenschaften sind wiederum eine Funktion der das Loch umgebenden Atmosphäre. Mittels des erfindungsgemäßen Verfahrens lassen sich solche atmosphärische Bedingungen um das Loch schaffen, dass sich die obengenannten Vorteile realisieren lassen.

Das Verfahren zeichnet sich dadurch aus, dass für jeden speziellen Anwendungsfall die Zusammensetzung, der Druck und der der Wechselwirkungszone zugeführte Volumenstrom des Prozessgases und/oder die Zuführstrategie (Prozessgasführung) in Abhängigkeit mindestens eines charakteristischen Merkmals des Lochs, wie der Lochdurchmesser, der gewünschten Konizität, einer definierten Verrundung mindestens eines der Lochränder beziehungsweise -kanten und dergleichen, und/oder wenigstens eines charakteristischen Merkmals des Werkstücks, beispielsweise die Wandstärke, das Werkstückmaterial und dergleichen, eingestellt werden/wird. Dabei müssen die Parameter des Prozessgases während der Herstellung eines Lochs nicht zwingend konstant sein, sondern können -wie bei einer vorteilhaften Ausführungsvariante vorgesehen- auch gesteuert, vorzugsweise zeitlich gesteuert werden. So ist beispielsweise ein "Vorbohren" des Lochs mit einem aus Helium bestehenden Prozessgas und ein anschließendes "Nachbohren/ Aufbohren" mit einem aus Argon bestehenden Prozessgas möglich.

Bei dem Verfahrens ist vorgesehen, dass der Laserstrahl ein Kurzpulslaserstrahl (ns-Pulse) mit einer Pulsdauer von vorzugsweise kleiner 100 ns oder ein Ultrakurzpulslaserstrahl (fs/ps-Pulse) ist.

Das während der Herstellung zur Anwendung kommende mindestens eine Prozessgas besteht aus wenigstens einem Gas, beispielsweise Helium (He), Sauerstoff ($O_2$), Argon (Ar) oder Stickstoff ($N_2$). Das Prozessgas kann jedoch auch aus mehreren der vorstehend genannten Gase bestehen, die zusammengemischt werden, vorzugsweise bevor sie der Wechselwirkungszone zugeführt werden beziehungsweise bevor die Wechselwirkungszone erreicht wird. Sofern das Prozessgas aus mehreren Gasen zusammengemischt wird, kann der Anteil jedes der Gase am Prozessgas zwischen 0% und 100% betragen, wobei die Summe der Anteile aller Gase des Prozessgases 100% beträgt. Da verschiedene Gase unterschiedliche physikalische Eigenschaften aufweisen, wird das Prozessgas aus verschiedenen Gasen in einem bestimmten Mischungsverhältnis zusammengemischt, so dass sich eine gewünschte Atmosphäre um das mittels des Laserstrahls zu bohrende Loch einstellen lässt, bei der sich eine gewünschte Lochform, nämlich Lochkonizität ergibt und vorzugsweise Schmelzgrate und die Schmelzschicht an den Lochwänden bei der Lasermaterialbearbeitung von metallischen Werkstoffen minimiert oder beseitigt werden.

Es ist vorgesehen, dass der der Wechselwirkungszone zugeführte Volumenstrom in einem Bereich von 0,8 N1/min bis 270 N1/min und der Druck des Prozessgases in einem Bereich von 0,1 bar bis 20 bar, vorzugsweise von 0,3 bar bis 15 bar, insbesondere von 0,5 bar bis 10 bar, liegt.

Es ist vorgesehen, dass ein Loch mit einer gewünschten Konizität hergestellt wird, wobei der Konizitäts-Faktor (k) des Lochs durch eine entsprechende Prozessgasführung und Einstellung der Prozessgasparameter variierbar ist. Es hat sich gezeigt, dass sich ohne weiteres Löcher mit einem Konizitäts-Faktor k von -3 bis +3 herstellen lassen. Mittels dem erfindungsgemäßen Verfahren lassen sich jedoch auch Konizitäts-Faktoren realisieren, die größer als +/- 3 sind. Der Konizitäts-Faktor k ist folgendermaßen definiert:

$$(\varnothing_A - \varnothing_E)/10$$

wobei $\varnothing_A$ der Durchmesser der Laseraustrittsöffnung und $\varnothing_E$ der Durchmesser der Lasereintrittsöffnung ist und die Dimensionen der Durchmesser $\mu m$ (Mikrometer) sind.

Mittels des erfindungsgemäßen Verfahrens lässt sich für Löcher mit einem Durchmesser von kleiner 250 $\mu m$ und für Wandstärken des Werkstücks von in etwa 0,2 mm bis 2 mm praktisch jede gewünschte Konizität einstellen, wobei der Konizitäts-Faktor k beispielsweise in einem Bereich von -3 bis +3 liegen kann.

Weitere vorteilhafte Ausführungsformen des Verfahrens ergeben sich aus Kombinationen der in den Unteransprüchen genannten Merkmale.

Der Gegenstand der Erfindung betrifft weiterhin eine Vorrichtung mit den in Anspruch 10 genannten Merkmalen, die insbesondere zur Durchführung des vorstehend genannten Verfahrens geeignet ist. Sie umfasst eine Laserstrahlquelle zum Erzeugen mindestens eines auf das Werkstück richtbaren Laserstrahls und eine Düsenanordnung, die mindestens eine mit wenigstens einem unter Druck stehenden Prozessgas beaufschlagbare Düse aufweist, wobei der aus der Düse austretende Gasstrahl in Richtung auf die Auftreffstelle des Laserstrahls an dem Werkstück beziehungsweise in die wechselwirkungszone zwischen Laserstrahl und Werkstück richtbar ist. Die Vorrichtung zeichnet sich durch eine Einrichtung zur Einstellung der Zusammensetzung, des Druckes und/oder der der Auftreffstelle zugeführten Menge des Prozessgases aus. Durch die Verwendung eines für den jeweiligen Anwendungsfall geeigneten Prozessgases und/ oder der gezielten Einstellung des Prozessgasdrucks und/oder -volumenstroms können Lochkonizitäten variiert beziehungsweise gezielt eingestellt werden, ohne dass die Parameter des Laserstrahls verstellt werden müssen. Ferner können bei metallenen Werkstücken Schmelzgrate beziehungsweise Schmelzfilme an der Lochwand minimiert, vorzugsweise vollständig beseitigt werden.

Nach einer Weiterbildung der Erfindung ist vorgesehen, dass die Einrichtung mindestens eine Mischeinrichtung zum Mischen des Prozessgases und mindestens eine mit der Düse strömungstechnisch verbundene Zuführleitung zum Zuführen des gemischten Prozessgases aufweist. Das Prozessgas wird also zusammengemischt, bevor es die Wechselwirkungszone zwischen Laserstrahl und Werkstück erreicht. Die Mischeinrichtung weist vorzugsweise eine Steuerung zur Einstellung der Prozessgasparameter (Zusammensetzung, Druck, Volumenstrom) auf.

Weitere vorteilhafte Ausführungsformen der Vorrichtung ergeben sich aus Kombinationen der in den Unteransprüchen genannten Merkmale.

Zeichnungen

Die Erfindung wird nachfolgend in mehreren Ausführungsbeispielen anhand der zugehörigen Zeichnungen näher erläutert. Es zeigen:

Figur 1                eine Prinzipskizze des Aufbaus eines Ausführungsbeispiels der erfindungsgemäßen Vorrichtung;

Figuren 2 bis 4     jeweils ein Ausführungsbeispiel einer Düsenanordnung zum Zuführen von Prozessgas;

Figuren 5 und 6    jeweils einen Querschnitt durch ein mittels eines Laserstrahls hergestellten Lochs unter Verwendung verschiedener Prozessgase; und

Figur 7                ein Diagramm, in dem der laserstrahleintrittsseitige Lochdurchmesser und der Konizitäts-Faktor k als Funktion des Prozessgasdrucks aufgetragen sind.

Beschreibung der Ausführungsbeispiele

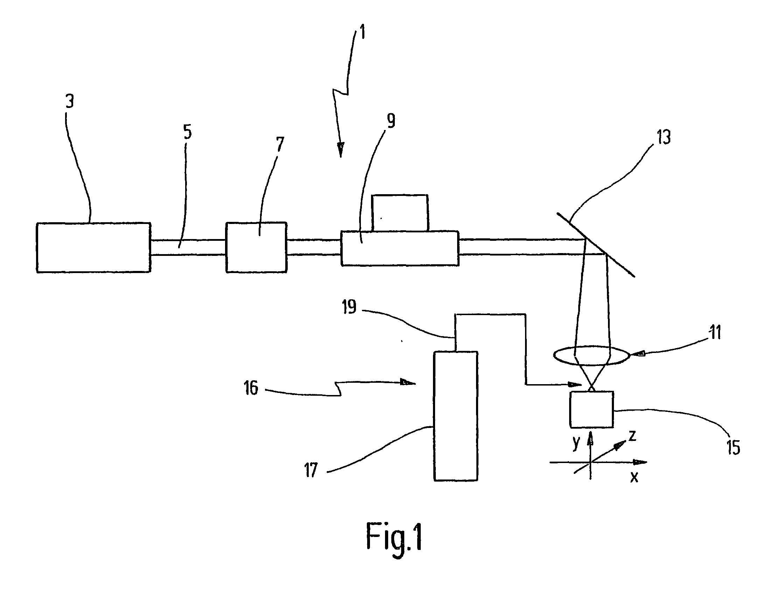

In Figur 1 ist in schematischer Darstellung der Aufbau eines Ausführungsbeispiels einer Vorrichtung 1 zum Einbringen von Löchern in Werkstücke gezeigt. Die Vorrichtung 1 umfasst eine Laserstrahlquelle 3, mittels derer sich Kurzpuls- oder Ultrakurzpulslaserstrahlen erzeugen lassen, die im Folgenden kurz als Laserstrahlen 5 bezeichnet werden. Im Strahlengang des Lasers befinden sich eine Aufweitungsoptik 7, eine Trepanieroptik 9 und eine Fokussieroptik 11. Im Bereich zwischen der Trepanieroptik 9 und der Fokussieroptik 11 wird der Laserstrahl 5 mittels eines Umlenkungsspiegels 13 hier beispielhaft um 90° umgelenkt. Bei einem anderen, in den Figuren nicht dargestellten Ausführungsbeispiel der Vorrichtung 1 ist im Strahlengang keine Aufweitungsoptik 7 angeordnet.

In Figur 1 ist ein Werkstück 15 gezeigt, auf das der Laserstrahl 5 gerichtet ist, um ein Loch, insbesondere ein Durchgangsloch, mit einer präzisen Konizität zu bohren. Das Werkstück 15 ist -in Richtung des Strahlengangs des Laserstrahls 5 gesehender Fokussieroptik nachgeordnet. Um die Stelle des Werkstücks 15, an der das Loch gebohrt werden soll, exakt im Strahlengang des Laserstrahls 5 anzuordnen, ist eine nicht dargestellte Stelleinrichtung zur Positionierung des Werkstücks 15 vorgesehen, mittels derer das Werkstück 15 -wie mit Pfeilen angedeutet- in x-, y- und z-Richtung verstellbar ist.

Die Vorrichtung 1 weist ferner eine Einrichtung 16 zur Einstellung der Zusammensetzung des Prozessgases auf, die eine Mischeinrichtung 17 mit einer Steuerung zum Mischen des Prozessgases umfasst. Das Prozessgas besteht vorzugsweise aus mindestens einem der folgenden Gase oder einer Mischung aus denselben: Helium, Sauerstoff, Argon und Stickstoff. In der Mischeinrichtung 17 können diese Gase und gegebenenfalls noch weitere geeignete Gase in einem bestimmten, vorwählbaren Verhältnis zusammengemischt werden. Der Anteil jedes der Gase am Prozessgas kann zwischen 0% und 100% betragen, sofern das Prozessgas ein Mischgas ist. Der der Wechselwirkungszone zwischen Laserstrahl 5 und Werkstück 15 zugeführte Prozessgas-Volumenstrom liegt vorzugsweise in einem Bereich von in etwa 0,8 Nl/min bis 270 Nl/min (Normliter/Minute). Der ProzessgasDruck liegt vorzugsweise zwischen 0,1 bar und 20 bar, insbesondere zwischen 0,5 bar und 10 bar.

Das Prozessgas wird über eine Zuführleitung 19 einer mindestens eine Düse umfassenden, in Figur 1 nicht dargestellten Düsenanordnung zugeführt. Mit Hilfe der Einrichtung 16 können/kann der Druck und/oder die der Wechselwirkungszone zwischen Laserstrahl 5 und Werkstück 15 zugeführte Menge des Prozessgases eingestellt werden. Eine zeitliche Steuerung der Prozessgasparameter ist ohne weiteres realisierbar. So ist beispielsweise ein Vorbohren mit Helium und ein anschließendes Nachbohren mit Argon möglich.

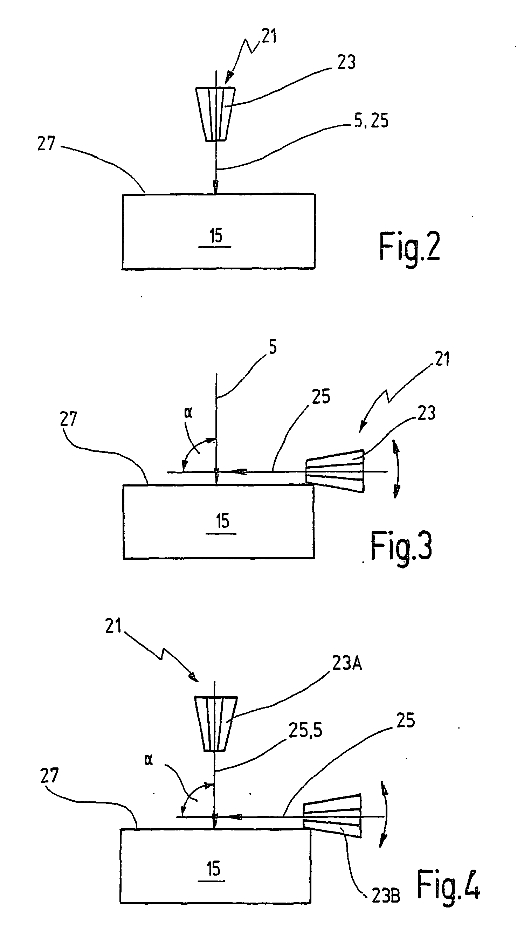

Figur 2 zeigt in schematischer Darstellung einen Ausschnitt eines ersten Ausführungsbeispiels der Düsenanordnung 21, die eine mit dem unter Druck stehenden Prozessgas beaufschlagbare Düse 23 umfasst. Die Düse 23 weist im Längsschnitt eine konische Form auf, wobei deren vom Prozessgas durchströmter Querschnitt in Richtung auf das Werkstück 15 kleiner wird. Die Anordnung der Düse 23 ist hier so gewählt, dass der aus der Düse 23 austretende Prozessgasstrahl 25 koaxial zum Laserstrahl 5 verläuft. Der Prozessgasstrahl 25 und der Laserstrahl 5 sind hier senkrecht gegenüber einer Werkstückoberseite 27 ausgerichtet.

Figur 3 zeigt ein zweites Ausführungsbeispiel der Düsenanordnung 21, die sich von der anhand der Figur 2 beschriebenen Düsenanordnung 21 lediglich dadurch unterscheidet, dass die Düse 23 so gegenüber dem Laserstrahl 5 ausgerichtet ist, dass der aus der Düse 23 ausströmende Prozessgasstrahl 25 unter einem Winkel $\alpha$ von in etwa 90° dem Laserstrahl 5 beziehungsweise der Wechselwirkungszone zugeführt wird. Der Prozessgasstrahl 25 verläuft hier parallel zur ebenen Werkstückoberseite 27. Die Düse 23 ist vorzugsweise verstellbar ausgebildet, so dass eine Einstellung des Winkels $\alpha$, unter dem der Prozessgasstrahl 25 gegenüber dem Laserstrahl 5 verläuft, einstellbar ist und zwar zwischen 0° und 90°.

Figur 4 zeigt ein drittes Ausführungsbeispiel der Düsenanordnung 21, die Düsen 23A und 23B aufweist, wobei die Düse 23A in Anordnung und Ausgestaltung der anhand der Figur 2 beschriebenen Düse 23 und die Düse 23B der anhand der Figur 3 beschriebenen Düse 23 entsprechen. Wie mit einem Doppelpfeil angedeutet, ist die Düse 23B so gegenüber der Düsen 23A verstellbar, dass der Winkel $\alpha$, unter dem die Prozessgasstrahlen 25 beziehungsweise der aus der Düsen 23B ausgeblasene Prozessgas 25 und der Laserstrahl 5 aufeinander treffen, zwischen 0° und 90° variierbar ist. Die Düsen 23A, 23B können mit dem gleichen Prozessgas oder aber mit unterschiedlichen Prozessgasen beaufschlagt werden. Vorzugsweise sind die Parameter der aus den Düsen 23A, 23B ausblasbaren Prozessgasstrahlen unabhängig voneinander einstellbar, was eine optimale Einstellung der Atmosphäre um das mittels des Laserstrahls 5 in das Werkstück 15 eingebrachte Loch ermöglicht.

Alternativ zu den anhand der Figuren beschriebenen Düsen mit konischem Querschnitt können beispielsweise auch Laval-Düsen, Ringdüsen, Freiformen oder ähnliche Arten ebenfalls eingesetzt werden, das heißt, die vorstehend beschriebenen Düsengeometrie ist nur eine von mehreren möglichen Düsengeometrien.

Mit der anhand der Figuren 1 bis 4 beschriebenen Vorrichtung 1 lässt sich das erfindungsgemäße Verfahren ohne weiteres realisieren. Es sieht vor, dass die Zusammensetzung, der Druck und/oder der Volumenstrom des Prozessgases so gewählt werden/wird und dieses der Wechselwirkungszone zwischen dem Laserstrahl und dem Werkstück derart zugeführt wird, dass das mittels des Laserstrahls hergestellte Loch eine gewünschte Qualität, insbesondere Konizität und/oder keine beziehungsweise nur geringe Schmelzgrate oder Schmelzfilme, aufweist, ohne dass hierzu das Werkstück 15 in eine Taumelbewegung versetzt und/oder die Parameter des Laserstrahls 5 verändert werden müssen. Vorzugsweise sind die obengenannten Vorrichtungteile zumindest während der Herstellung der Bohrung in einer feststehenden Position gegenüber dem Werkstück 15 angeordnet. Hierunter sind nicht die optischen Keilplatten der in Figur 1 angedeuteten Trepanieroptik 9 zu verstehen, die sich während des Betriebs der Vorrichtung 1 in Rotation befinden.

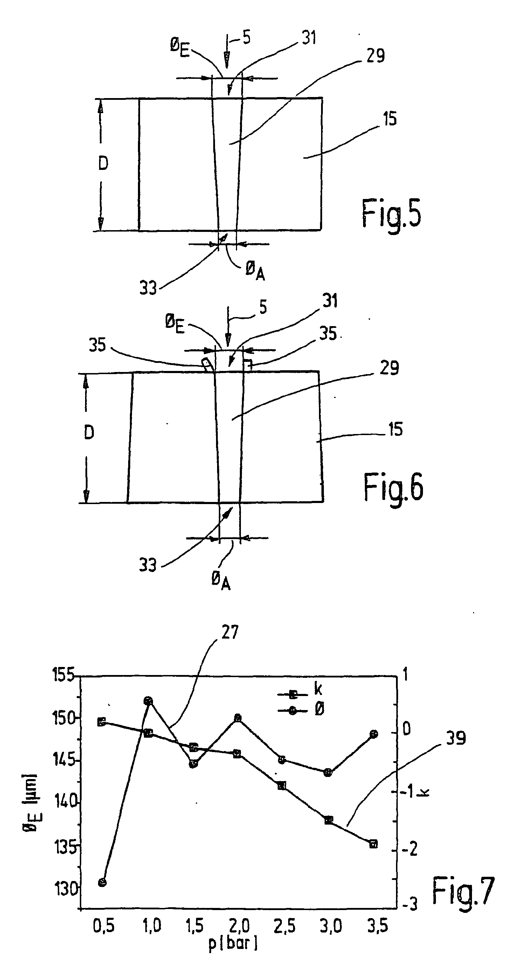

In Figur 5 ist ein Längsschnitt durch ein mittels der Vorrichtung 1 erzeugten konischen Lochs 29 dargestellt, dessen größter Durchmesser in etwa 100 $\mu$m beträgt. Die Dicke D des Werkstücks 15 ist nur relativ gering und kann ohne weiteres in einem Bereich zwischen 0,2 mm und 2,0 mm liegen. Das während der Herstellung des Lochs 29 der Wechselwirkungszone zwischen Laserstrahl 5 und Werkstück 15 zugeführte Prozessgas besteht aus 80% Argon und 20% Helium. Es ist ersichtlich, dass das Loch 29 an der Laserstrahleintrittsöffnung 31 einen Durchmesser $\emptyset_E$ aufweist, der größer ist als der Durchmesser $\emptyset_A$ an der Laserstrahlaustrittsöffnung 33. Der Konizitäts-Faktor k (($\emptyset_A - \emptyset_E$)/10) beträgt hier in etwa -2. Es ist ersichtlich, dass das Loch 29 praktisch keine Schmelzgrate und der nicht dargestellte Schmelzfilm an der Loch-/Bohrwand nur eine minimale Dicke aufweist. Die Lochränder am Laserstrahleintritt und -austritt weisen jeweils eine relativ scharfe Kante auf. Durch eine entsprechende Änderung der Prozessgasparameter und/oder der Zusammensetzung des Prozessgases können auch verrundete Lochkanten realisiert werden.

In Figur 6 ist ein Längsschnitt durch ein konisches Loch 29 gezeigt, bei dessen Herstellung das der Wechselwirkungszone zwischen Laserstrahl 5 und Werkstück 15 zugeführte Prozessgas aus 20% Argon und 80% Helium besteht. Die übrigen Prozessgasparameter (Druck, Volumenstrom) und die Laserstrahlparameter sind die gleichen wie bei der Herstellung des in Figur 5 dargestellten Lochs 29. Es ist ohne weiteres ersichtlich, dass das Loch 29 einen deutlich größeren Konizitäts-Faktor k aufweist, der hier in etwa -1 beträgt. Das bedeutet, dass die Konizität des Lochs 29 ausschließlich aufgrund der Änderung der Zusammensetzung des Prozessgases beziehungsweise der Höhe der Volumenanteile der zum Prozessgas zusammengemischten Gase unterschiedlich ist. Die Lochkonizität ist also gezielt, ausschließlich durch die Zusammensetzung des Prozessgases variierbar. Darüber hinaus ist auch eine gezielte Zuführung des Prozessgases an die Wechselwirkungszone erforderlich, wie sie beispielsweise anhand der Figuren 1 bis 4 beschrieben ist. Um eine noch präzisere Einstellung der Lochkonizität zu ermöglichen, kann bei dieser Ausführungsvariante gegebenenfalls auch noch der Druck und der der Wechselwirkungszone zwischen Laserstrahl 5 und Werkstück 15 zugeführte Prozessgasvolumenstrom entsprechend verändert werden.

Das in Figur 6 dargestellte Loch weist im Gegensatz zu dem in Figur 5 gezeigten Loch 29 auf der Werkstückoberseite 27 Schmelzgrate 35 auf, während der Lochrand an der Laserstrahlaustrittsöffnung 33 scharfkantig ist. Durch eine entsprechende Einstellung der Prozessgasparameter und gezielte Prozessgaszuführung an die Wechselwirkungszone können also die charakteristischen Merkmale des Lochs (Konizität, Durchmesser, Lochrand scharfkantig oder verrundet, und dergleichen) exakt gesteuert werden.

Festzuhalten bleibt, dass bei Löchern mit einem Durchmesser kleiner 250 $\mu$m und bei einer Wanddicke D des Werkstücks 15 kleiner oder gleich 2 mm ohne weiteres jeder beliebige Konizitäts-Faktor (k) im Bereich zwischen -3 bis +3 oder auch in einem größeren Bereich realisierbar ist, indem eine entsprechende Prozessgaszusammensetzung gewählt und eine gezielte Zuführung des Prozessgases an die Wechselwirkungszone erfolgt. Weitere wichtige Parameter zur Einstellung einer präzisen Lochkonizität sind der Druck und der Volumenstrom des Prozessgases.

Bei einem vorteilhaften Ausführungsbeispiel der erfindungsgemäßen Vorrichtung ist eine optische Einrichtung, insbesondere mit einer speziellen Trepanieroptik, zur Beeinflussung des Laserstrahls eingesetzt, mittels derer allein schon konische Löcher mit einem bestimmten, vorzugsweise einstellbaren Konizitäts-Faktor herstellen lassen, ohne dass dazu die Prozessgasparameter und -führung in spezieller Weise variiert beziehungsweise eingestellt werden müssen. Beispielsweise kann mit einer bestimmten Einstellung der Optik ein konisches Loch mit einem Konizitäts-Faktor von 5 erzeugt werden. Mittels des erfindungsgemäßen Verfahrens, das eine gezielte Beeinflussung mindestens eines Prozessgasparameters und eine spezielle Zuführung des Prozessgases zur Wechselwirkungszone vorsieht, lässt sich nun in vorteilhafter Weise dieser Konizitäts-Faktor von 5, vorzugsweise sehr genau, vergrößern und verkleinern, beispielsweise auf 5,4 oder 3,7 oder 7,8. Mit anderen Worten, es ist eine Feineinstellung der durch die Laserstrahlparameter realisierten beziehungsweise bestimmten Lochkonizität möglich, ohne dass dazu die Laserstrahlparameter verändert werden müssen.

Figur 7 zeigt ein Diagramm, in dem auf der linken Ordinatenachse der laserstrahleintrittsseitige Lochdurchmesser $\varnothing_E$ in μm (Mikrometer), auf der rechten Ordinatenachse der Konizitäts-Faktor k des Lochs 29 und auf der Abszissenachse der Druck p des aus 50% Helium und 50% Sauerstoff bestehenden Prozessgases in bar aufgetragen sind. In dem Diagramm sind mehrere gemessene Lochdurchmesser $\varnothing_E$ und der jeweils zugehörige Konizitäts-Faktor k als Funktion des Prozessgasdrucks eingetragen. Die Löcher wurden alle unter gleichen Bedingungen hergestellt, das heißt, die Laserstrahlparameter und die Zusammensetzung des Prozessgases sind gleich sowie die Weise, wie es der Wechselwirkungszone zugeführt wurde. Lediglich der Druck des Prozessgases wurde verändert. Die ermittelten Werte sind der folgenden Tabelle zu entnehmen:

| Prozessgasdruck p [bar] | Lochdurchmesser Ø [μm] | Konizitäts-Faktor k |
|---|---|---|
| 0,5 | circa 131 | circa 0,25 |
| 1,0 | circa 152 | circa 0,00 |
| 1,5 | circa 144 | circa -0,25 |
| 2,0 | circa 150 | circa -0,30 |
| 2,5 | circa 145 | circa -0,90 |
| 3,0 | circa 143 | circa -1,50 |
| 3,5 | circa 148 | circa -1,90 |

Die Tabellenwerte zeigen, dass nur durch variieren des Prozessgasdrucks, also bei gleicher Zusammensetzung des Prozessgases deutlich unterschiedliche Lochkonizitäten und Lochdurchmesser herstellbar sind.

Zusammenfassend bleibt festzuhalten, dass mittels dem erfindungsgemäßen Verfahren die Querschnittsform der Bohrungen/Löcher (beispielsweise konisch oder mit konstantem Querschnitt über seine gesamte Länge) gezielt einstellbar ist. Besonders hervorzuheben ist, dass laserstrahleintrittsseitige Schmelzgrate auf dem Werkstück und Schmelzfilme an Lochwänden auf ein niedriges Maß gesenkt werden können, dass Lochkantenformen einstellbar sind und dass Nachbearbeitungsprozesse stark vereinfacht werden können oder im Idealfall ganz entfallen können. Insbesondere die vorstehend genannten Kriterien bestimmen die Lochqualität, die mittels der erfindungsgemäßen Vorrichtung beziehungsweise dem Verfahren hergestellten Löchern gegenüber bekannten Vorrichtungen/Verfahren besonders hoch ist. Das Verfahren eignet sich insbesondere zur Herstellung von Präzisionsmikrolöchern mit einem Durchmesser, der kleiner 250 μm ist, wie sie beispielsweise bei Düsen in Kraftstoffeinspritzsystemen vorgesehen sind. Mittels der erfindungsgemäßen Vorrichtung und dem damit realisierbaren Verfahren sind auch konische Löcher mit größerem Durchmesser präzise herstellbar.

**Patentansprüche**

1.   Verfahren zum Herstellen von Zächern (29) in einem Werkstück (15) mittels mindestens eines als Kurzpuls- oder Ultrakurzpulslaserstrahl ausgebildeten Laserstrahls (5), wobei einer Wechselwrirkungszone an der Auftreffstelle des Laserstrahls (5) auf dem Werkstück (15) mindestens ein Prozessgas derart zugeführt wird und mindestens ein Parameter des Prozessgases so gewählt wird, dass das Loch (29) eine gewünschte Qualität aufweist, **dadurch gekennzeichnet, dass** mittels optischer Beeinflussung des Laserstrahls (5) das Loch (29) als konisches Loch (29) mit einem einstellbaren Konizitäts-Faktor hergestellt wird und dass für eine gewünschte Feineinstellung der Zochhonizität der Druck, ein der Wechselwirkungszone zugeführter Volumenstrom und die Zusammensetzung des aus Helium (He), Sauerstoff ($O_2$), Argon (Ar) und/oder Stickstoff ($N_2$) bestehenden beziehungsweise zusammengemischten Prozessgases eingestellt werden, wobei der Druck des Prozessgases im Bereich von 0,1 bar bis 20 bar und der Volumenstrom des Prozessgases in einem Bereich von 0,8 Nl/min bis 270 Nl/min eingestellt werden.

2. Verfahren nach Anspruch 1, **dadurch gekennzeichnet, dass** wenigstens einer der Parameter des Prozessgases während der Herstellung des Lochs (29) gesteuert, vorzugsweise zeitlich gesteuert wird.

3. Verfahren nach einem der vorhergehenden Ansprüche, **dadurch gekennzeichnet, dass** Löcher mit einem Durchmesser von kleiner 250 $\mu$m, insbesondere kleiner 120 $\mu$m, hergestellt werden.

4. Verfahren nach einem der vorhergehenden Ansprüche, **dadurch gekennzeichnet, dass** die Parameter des Laserstrahls (5) zur Herstellung von Löchern (29) mit unterschiedlicher Konizität gleich sind.

5. Verfahren nach Anspruch 1, **dadurch gekennzeichnet, dass** der Anteil jedes der Gase am Prozessgas zwischen 0% und 100% betragen kann, wobei die Summe der Anteile aller Gase des Prozessgases 100% beträgt.

6. Verfahren nach einem der vorhergehenden Ansprüche, **dadurch gekennzeichnet, dass** das Zusammenmischen des sich aus mehreren Gasen zusammensetzenden Prozessgases vor seinem Erreichen der Wechselwirkungszone erfolgt.

7. Verfahren nach einem der vorhergehenden Ansprüche, **dadurch gekennzeichnet, dass** der Druck des Prozessgases in einem Bereich von 0,3 bar bis 15 bar, insbesondere von 0,5 bar bis 10 bar, liegt.

8. Verfahren nach einem der vorhergehenden Ansprüche, **dadurch gekennzeichnet, dass** der Prozessgasstrahl (25) koaxial zum Laserstrahl (5) verläuft oder diesem unter einem Winkel $\alpha$ zugeführt wird, der in einem Bereich von 0° bis 90° liegt.

9. Verfahren nach einem der vorhergehenden Ansprüche 1 bis 7, **dadurch gekennzeichnet, dass** der Wechselwirkungszone mehrere Prozessgasstrahlen (25) zugeführt werden, wobei ein erster Prozessgasstrahl (25) koaxial zum Laserstrahl (5) verläuft und ein zweiter Prozessgasstrahl (25) unter einem Winkel $\alpha$ zum Laserstrahl (5) gerichtet ist, der in einem Bereich von 0° und 90° liegt.

10. Vorrichtung (1) zum Herstellen von Löchern (29) in einem Werkstück (15), insbesondere zur Durchführung des Verfahrens nach einem der Ansprüche 1 bis 9, mit einer Laserstrahlquelle (3) zum Erzeugen mindestens eines auf das Werkstück (15) richtbaren als Kurzpuls- oder Ultrakurzpulslaserstrahl ausgebildeten Laserstrahls (5), einer Düsenanordnung (21), die mindestens eine mit wenigstens einem unter Druck stehenden Prozessgas beaufschlagbare Düse (23;23A,23B) aufweist, wobei der aus der Düse (23;23A,23B) austretende Prozessgasstrahl (25) in Richtung auf die Auftreffstelle des Laserstrahls (5) an dem Werkstück (15) richtbar ist, und einer Einrichtung (16) zur Einstellung der Zusammensetzung, des Druckes und der der Auftreffstelle zugeführten Menge des Prozessgases, **gekennzeichnet durch,** eine optischen Einrichtung, insbesondere mit einer Trepanieroptik (9), zum Herstellen konischer Löcher mit einem einstellbaren Konizitäts-Faktor **durch** optische Beeinflussung des Laserstrahls (5), wobei der der Düse (23;23A,23B) zugeführte Volumenstrom des aus Helium (He), Sauerstoff ($O_2$), Argon (Ar) und/ oder Stickstoff ($N_2$) bestehenden beziehungsweise zusammengemischten Prozessgases in einem Bereich von in etwa 0,8 Nl/min bis 270 Nl/min und der Druck des Prozessgases in einem Bereich von 0,1 bar bis 20 mittels der Einrichtung (16) einstellbar ist.

11. Vorrichtung nach Anspruch 10, **dadurch gekennzeichnet, dass** die Einstellung der mittels der Einrichtung (16) einstellbaren Prozessgasparameter zeitlich steuerbar ist.

12. Vorrichtung nach Anspruch 10, **dadurch gekennzeichnet, dass** der Anteil jedes der Gase am Prozessgas zwischen 0% und 100% betragen kann, wobei die Summe der Anteile aller Gase des Prozessgases 100% beträgt.

13. Vorrichtung nach einem der vorhergehenden Ansprüche, **dadurch gekennzeichnet, dass** der Druck des Prozessgases in einem Bereich von 0,3 bar bis 15 bar, insbesondere von 0,5 bar bis 10 bar, liegt.

14. Vorrichtung nach einem der vorhergehenden Ansprüche, **dadurch gekennzeichnet, dass** die Einrichtung (16) mindestens eine Mischeinrichtung (17) zum Mischen des Prozessgases und mindestens eine mit der Düse (23;

23A,23B) strömungstechnisch verbundene Zuführleitung (19) zum Zuführen des gemischten Prozessgases aufweist.

15. Vorrichtung nach einem der vorhergehenden An-sprüche, **dadurch gekennzeichnet, dass** der aus der Düse (23; 23A) austretende Prozessgasstrahl (25) koaxial zum Laserstrahl (5) verläuft und vorzugsweise orthogonal oder im Wesentlichen orthogonal auf die Werkstückoberfläche (27) auftrifft.

16. Vorrichtung nach einem der vorhergehenden Ansprüche 10 bis 14, **dadurch gekennzeichnet, dass** der aus der Düse (23;23B) austretende Prozessgasstrahl (25) senkrecht zum Laserstrahl (5) gerichtet ist oder in einem spitzen Winkel $\alpha$ zum Laserstrahl (5) verläuft.

17. Vorrichtung nach einem der vorhergehenden Ansprüche, **dadurch gekennzeichnet, dass** die Düsenanordnung mindestens zwei Düsen (23A,23B) umfasst, wobei der aus einer ersten Düse (23A) austretende Prozessgasstrahl (25) koaxial zum Laserstrahl (5) verläuft und der aus einer zweiten Düse (23B) austretende Prozessgasstrahl (25) unter einem Winkel $\alpha$ zum Laserstrahl (5) verläuft, der in einem Bereich von 0° bis 90° liegt.

## Claims

1. Method of producing holes (29) in a workpiece (15) by means of at least one laser beam (5) formed as a short-pulse or ultrashort-pulse laser beam, wherein at least one process gas is fed to an interaction zone at the impingement point of the laser beam (5) on the workpiece (15) in such a way that and at least one parameter of the process gas is selected in such a way that the hole (29) has a desired quality, **characterized in that** the hole (29) is produced as a conical hole (29) having an adjustable conicity factor by optically influencing the laser beam (5), and **in that** the pressure, a volumetric flow fed to the interaction zone and the composition of the process gas consisting of or mixed together from helium (He), oxygen ($O_2$), argon (Ar) and/or nitrogen ($N_2$) are set for a desired precision setting of the hole conicity, the pressure of the process gas being set within the range of 0.1 bar to 20 bar and the volumetric flow of the process gas being set within a range of 0.8 Nl/min to 270 Nl/min.

2. Method according to Claim 1, **characterized in that** at least one of the parameters of the process gas is controlled, preferably with respect to time, while the hole (29) is being produced.

3. Method according to either of the preceding Claims, **characterized in that** holes having a diameter of less than 250 $\mu$m, in particular less than 120 $\mu$m, are produced.

4. Method according to one of the preceding Claims, **characterized in that** the parameters of the laser beam (5) for producing holes (29) of different conicity are identical.

5. Method according to Claim 1, **characterized in that** the proportion of each of the gases making up the process gas can be between 0% and 100%, the sum of the proportions of all the gases making up the process gas being 100%.

6. Method according to one of the preceding Claims, **characterized in that** the process gas composed of a plurality of gases is mixed together before it reaches the interaction zone.

7. Method according to one of the preceding claims, **characterized in that** the pressure of the process gas is within a range of 0.3 bar to 15 bar, in particular 0.5 bar to 10 bar.

8. Method according to one of the preceding Claims, **characterized in that** the process gas jet (25) runs coaxially to the laser beam (5) or is fed to the latter at an angle $\alpha$ which is within a range of 0° to 90°.

9. Method according to one of the preceding Claims 1 to 7, **characterized in that** a plurality of process gas jets (25) are fed to the interaction zone, a first process gas jet (25) running coaxially to the laser beam (5) and a second process gas jet (25) being directed at an angle $\alpha$ to the laser beam (5), said angle $\alpha$ being within a range of 0° to 90°.

10. Apparatus (1) for producing holes (29) in a workpiece (15), in particular for carrying out the method according to one of Claims 1 to 9, having a laser beam source (3) for producing at least one laser beam (5) which can be directed onto the workpiece (15) and is formed as a short-pulse or ultrashort-pulse laser beam, a nozzle arrangement (21) which has at least one nozzle (23; 23A, 23B), to which at least one process gas under pressure can be admitted, wherein the process gas jet (25) discharging from the nozzle (23; 23A, 23B) can be directed towards the impingement point of the laser beam (5) on the workpiece (15), and a device (16) for setting the composition, the pressure and the quantity, fed to the impingement point, of the process gas, **characterized by** an optical device, in particular having trepanning optics (9), for producing conical holes having an adjustable conicity factor by optically influencing the laser beam (5) formed as a short-pulse or ultrashort-pulse laser beam, wherein the volumetric flow, fed to the nozzle (23; 23A, 23B), of the process gas consisting of or mixed together from helium (He), oxygen ($O_2$), argon (Ar) and/or nitrogen ($N_2$) can be set within a range of approximately 0.8 Nl/min to 270 Nl/min and the pressure of the process gas can be set within a range of 0.1 bar to 20 bar by means of the device (16).

11. Apparatus according to Claim 10, **characterized in that** the setting of the process gas parameters which can be set by means of the device (16) can be controlled with respect to time.

12. Apparatus according to Claim 10, **characterized in that** the proportion of each of the gases making up the process gas can be between 0% and 100%, the sum of the proportions of all the gases making up the process gas being 100%.

13. Apparatus according to one of the preceding Claims, **characterized in that** the pressure of the process gas is within a range of 0.3 bar to 15 bar, in particular 0.5 bar to 10 bar.

14. Apparatus according to one of the preceding Claims, **characterized in that** the device (16) has at least one mixing device (17) for mixing the process gas and at least one feed line (19), fluidically connected to the nozzle (23; 23A, 23B), for feeding the mixed process gas.

15. Apparatus according to one of the preceding Claims, **characterized in that** the process gas jet (25) discharging from the nozzle (23; 23A) runs coaxially to the laser beam (5) and impinges on the workpiece surface (27) preferably orthogonally or essentially orthogonally.

16. Apparatus according to one of the preceding Claims 10 to 14, **characterized in that** the process gas jet (25) discharging from the nozzle (23; 23B) is directed perpendicularly to the laser beam (5) or runs at an acute angle $\alpha$ to the laser beam (5).

17. Apparatus according to one of the preceding Claims, **characterized in that** the nozzle arrangement comprises at least two nozzles (23A, 23B), wherein the process gas jet (25) discharging from a first nozzle (23A) runs coaxially to the laser beam (5) and the process gas jet (25) discharging from a second nozzle (23B) runs at an angle $\alpha$ to the laser beam (5), said angle $\alpha$ being within a range of 0° to 90°.

**Revendications**

1. Procédé pour réaliser des trous (29) dans une pièce (15) à l'aide d'au moins un faisceau laser réalisé sous la forme d'un faisceau laser à impulsions brèves ou à impulsions ultra brèves,
selon lequel
on applique à une zone d'action alternée au point d'impact du faisceau laser (5) sur la pièce (15) au moins un gaz de procédé et on sélectionne au moins un paramètre du gaz de procédé de façon que le trou (29) présente la qualité souhaitée,
**caractérisé en ce qu'**
en influençant de manière optique le faisceau laser (5), on réalise le trou (29) sous la forme d'un trou conique (29) ayant un coefficient de conicité réglable, et
pour le réglage fin de la conicité souhaitée pour le trou, on règle la pression du débit volumique alimentant la zone d'interaction et la composition du gaz de procédé comprenant de l'hélium (He), de l'oxygène ($O_2$), de l'argon (Ar) et/ou de l'azote ($N_2$) ou de gaz de procédé, mélangés, la pression du gaz de procédé se situant dans une plage comprise entre 0,1 bar et 20 bars et le débit volumique du gaz de procédé se règle dans une plage comprise entre 0,8 Nl/min jusqu'à 270 Nl/min.

2. Procédé selon la revendication 1,
**caractérisé en ce qu'**
au moins l'un des paramètres du gaz de procédé est commandé de préférence en fonction du temps au cours du perçage du trou (29).

**3.** Procédé selon les revendications précédentes,
**caractérisé en ce qu'**
on perce des trous d'un diamètre inférieur à 250 µm notamment inférieur à 120 µm.

**4.** Procédé selon les revendications précédentes,
**caractérisé en ce que**
les paramètres du faisceau laser (5) pour le perçage des trous (29) ayant des conicités différentes sont les mêmes.

**5.** Procédé selon la revendication 1,
**caractérisé en ce que**
la teneur de chaque gaz dans le gaz de procédé est comprise entre 0 % et 100 % et la somme de tous les composants de tous les gaz du gaz de procédé est de 100 %.

**6.** Procédé selon les revendications précédentes,
**caractérisé en ce que**
le mélange du gaz de procédé formé à partir de plusieurs gaz est fait avant d'arriver dans la zone d'interaction.

**7.** Procédé selon les revendications précédentes,
**caractérisé en ce que**
la pression du gaz de procédé se situe dans une plage comprise entre 0,3 bar jusqu'à 15 bars et notamment entre 0,5 bar jusqu'à 10 bars.

**8.** Procédé selon les revendications précédentes,
**caractérisé en ce que**
le faisceau de gaz de procédé (25) est coaxial au faisceau laser (5) ou est fourni à celui-ci suivant un angle α situé dans une plage comprise entre 0° et 90°.

**9.** Procédé selon les revendications 1 à 7,
**caractérisé en ce que**
la zone de coopération reçoit plusieurs faisceaux de gaz de procédé (25), un premier faisceau de gaz de procédé (25) étant dirigé coaxialement par rapport au faisceau laser (5) et un second faisceau de gaz de procédé (25) fait un angle α par rapport au faisceau laser (5), cet angle étant compris dans une plage entre 0° et 90°.

**10.** Dispositif (1) pour percer des trous (29) dans une pièce (15) notamment pour la mise en oeuvre du procédé selon les revendications 1 à 9, à l'aide d'une source de faisceau laser (3) pour générer au moins un faisceau laser (5) dirigé sur la pièce (15), ce faisceau étant un faisceau laser à impulsions brèves ou à impulsions ultra courtes, comprenant un dispositif de buses (21) composé d'au moins une buse (23; 23A, 23B) recevant le gaz de procédé sous pression,
le faisceau de gaz de procédé (25) sortant de la buse (23 ; 23A, 23B) étant dirigé vers le point d'impact du faisceau laser (5) sur la pièce (15), et une installation (16) pour régler la composition, la pression et la quantité de gaz de procédé arrivant sur le point d'impact,
**caractérisé par**
une installation optique notamment une optique de trépanation (9) pour réaliser des trous coniques ayant un coefficient de conicité réglable en influençant de manière optique le faisceau laser (5),
la buse (23 ; 23A, 23B) recevant un débit volumique d'un gaz de procédé composé d'hélium (He), d'oxygène (O$_2$), d'argon (Ar) et/ou d'azote (N$_2$) ou composés de tels gaz, avec un débit de l'ordre de 0,8 Nl/min jusqu'à 270 Nl/min et une pression de gaz de procédé dans une plage de 0,1 bar jusqu'à 20 bars réglable à l'aide de l'installation (16).

**11.** Dispositif selon la revendication 10,
**caractérisé en ce que**
le réglage des paramètres réglables du procédé se commande dans le temps à l'aide de l'installation (16).

**12.** Dispositif selon la revendication 10,
**caractérisé en ce que**
la teneur de chaque gaz dans le gaz de procédé est comprise entre 0 % et 100 % et la somme des composants de tous les gaz dans le gaz de procédé est de 100 %.

**13.** Dispositif selon les revendications précédentes,

**caractérisé en ce que**

la pression du gaz de procédé se situe dans une plage comprise entre 0,3 bar jusqu'à 15 bars et notamment entre 0,5 bar jusqu'à 10 bars.

**14.** Dispositif selon les revendications précédentes,
**caractérisé en ce que**
l'installation (16) comporte au moins une installation de mélange (17) pour mélanger le gaz de procédé et au moins une conduite d'alimentation (19) reliée en technique fluidique à la buse (23 ; 23A, 23B) pour fournir le gaz de procédé mélangé.

**15.** Dispositif selon les revendications précédentes,
**caractérisé en ce que**
le jet de gaz de procédé (25) sortant de la buse (23 ; 23A) est dirigé coaxialement par rapport au faisceau laser (5) et de préférence dans une direction perpendiculaire ou pratiquement perpendiculaire à la surface supérieure (27) de la pièce.

**16.** Dispositif selon les revendications précédentes 10 à 14,
**caractérisé en ce que**
le faisceau de gaz de procédé (25) sortant de la buse (23 ; 23B) est dirigé perpendiculairement au faisceau laser (5) ou suivant un angle $\alpha$ par rapport au faisceau laser (5).

**17.** Dispositif selon les revendications précédentes,
**caractérisé en ce que**
le dispositif de buses comprend au moins deux buses (23A, 23B) et le faisceau de gaz de procédé (25) sortant d'une première buse (23A) est coaxial au faisceau laser (5) et le faisceau de gaz de procédé (25) sortant de la seconde buse (23B) fait un angle $\alpha$ par rapport au faisceau laser (5) qui se situe dans une plage comprise entre 0° et 90°.

Fig.1

Fig.2

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 0635331 A1

**In der Beschreibung aufgeführte Nicht-Patentliteratur**

• **SUN, J.** Intert gas beam delivery for ultrafast laser micromachining at ambient pressure. *J. Appl. Phys.,* 15. Juni 2001, vol. 89 (12